(19) Europäisches Patentamt
European Patent Office
Office européen des brevets

(11) EP 4 745 854 A1

(12) EUROPEAN PATENT APPLICATION

(43) Date of publication:
20.05.2026 Bulletin 2026/21

(51) International Patent Classification (IPC):
G06Q 10/0631 (2023.01)

(21) Application number: 24315520.7

(52) Cooperative Patent Classification (CPC):
G06Q 10/06315

(22) Date of filing: 15.11.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Amadeus S.A.S.
06410 Biot (FR)

(72) Inventors:
• Fontana, Umberto
06300 Nice (FR)
• Costanza, Claudio
06500 Menton (FR)
• Saidi, Mohammed Amine
06600 ANTIBES (FR)
• Bessassi, Selim
06200 NICE (FR)
• Rigal, Vincent Charles Georges
06600 Antibes (FR)
• Thonnard, Olivier Jean Charles
06130 GRASSE (FR)
• Boustala, Mehdi
06160 Antibes (FR)

(74) Representative: Samson & Partner Patentanwälte
mbB
Widenmayerstraße 6
80538 München (DE)

(54) **DENIAL OF INVENTORY ATTACK DETECTION AND MITIGATION**

(57) A method includes: generating, from a repository of inventory data corresponding to a reservable inventory, a set of data samples corresponding to changes to the inventory data within a time window; determining, via execution of a machine learning module, an anomaly score for each data sample in the set; determining an aggregate anomaly score for the window; comparing the aggregate anomaly score to a threshold; and initiating a mitigation action when the aggregate anomaly score exceeds the threshold.

FIG. 1

**Description**

**FIELD**

The specification relates generally to detecting and mitigating disruptions to information technology systems, and specifically to methods and systems for denial of inventory attack detection and mitigation.

**BACKGROUND**

Denial of inventory (DoI) attacks, which may also be referred to as seat spinning attacks in connection with travel products and services such as flight reservations, involve the booking of inventory (e.g., seats on a flight), followed by the cancellation of that booking prior to payment, or the abandonment of the booking without payment. Such attacks place temporary holds on inventory, distorting the inventory that is actually available for a period of time. Such distortions can lead to price distortions, sub-optimal allocation of resources by operators such as airlines, and the like. Such attacks may mimic legitimate consumer activity, however, and are therefore difficult to detect and mitigate. '

**SUMMARY**

Examples disclosed in the specification are directed to a method, comprising: generating, from a repository of inventory data corresponding to a reservable inventory, a set of data samples corresponding to changes to the inventory data within a time window; determining, via execution of a machine learning module, an anomaly score for each data sample in the set; determining an aggregate anomaly score for the window; comparing the aggregate anomaly score to a threshold; and initiating a mitigation action when the aggregate anomaly score exceeds the threshold.

According to some embodiments of this method, generating each data sample in the set includes:

obtaining a transaction record defining a reserved portion of the inventory; and
extracting a feature from the transaction record.

According to some embodiments of this method, the reservable inventory includes a flight, and wherein the feature includes at least one of:

an origin location of the flight;
a destination location of the flight;
a passenger name; or
a number of seats in the reserved portion.

According to some embodiments of this method, the machine learning module includes an isolation forest.

According to some embodiments of this method, determining the aggregate anomaly score includes: determining a count of a subset of the data samples having anomaly scores that exceed a sample threshold.

According to some embodiments of this method, the mitigation action includes transmitting a notification including an indicator of the time window.

According to some embodiments of this method, the mitigation action includes:

discarding reservation records in the repository that correspond to data samples having anomaly scores exceeding a sample threshold; and
releasing reserved inventory corresponding to the discarded reservation records.

According to some embodiments of this method, generating each data sample in the set includes: obtaining, from the repository, an occupancy ratio corresponding to the inventory at a given time within the time window.

According to some embodiments of this method, the set of data samples include a time sequence of occupancy ratios.

According to some embodiments of this method, determining the anomaly score for each data sample in the set includes:

generating a reconstruction of the set of data samples; and
determining the anomaly score by comparing the reconstruction with the set of data samples.

According to some embodiments, the method comprises for each of the set of data samples:

determining a primary sample threshold; and

determining a secondary sample threshold based on a variability metric corresponding to differences between (i) the primary sample threshold for previous data samples in the time window, and (ii) anomaly scores for the previous data samples;

weighting the anomaly score based on whether the anomaly score exceeds the secondary sample threshold.

Further examples disclosed in the specification are directed to a computing device, comprising: a memory storing a repository of inventory data corresponding to a reservable inventory; and a processor configured to: generate, from the repository, a set of data samples corresponding to changes to the inventory data within a time window; determine, via execution of a machine learning module, an anomaly score for each data sample in the set; determine an aggregate anomaly score for the window; compare the aggregate anomaly score to a threshold; and initiate a mitigation action when the aggregate anomaly score exceeds the threshold.

According to some embodiments of the computing device, the processor is configured to generate each data sample in the set by:

obtaining a transaction record defining a reserved portion of the inventory; and

extracting a feature from the transaction record.

According to some embodiments of the computing device, the reservable inventory includes a flight, and wherein the feature includes at least one of:

an origin location of the flight;

a destination location of the flight;

a passenger name; or

a number of seats in the reserved portion.

According to some embodiments of the computing device, the machine learning module includes an isolation forest.

According to some embodiments of the computing device, the processor is configured to determine the aggregate anomaly score by:

determining a count of a subset of the data samples having anomaly scores that exceed a sample threshold.

According to some embodiments of the computing device, the processor is configured to initiate the mitigation action by transmitting a notification including an indicator of the time window.

According to some embodiments of the computing device, the processor is configured to initiate the mitigation action by:

discarding reservation records in the repository that correspond to data samples having anomaly scores exceeding a sample threshold; and

releasing reserved inventory corresponding to the discarded reservation records.

According to some embodiments of the computing device, the processor is configured to generate each data sample in the set by:

obtaining, from the repository, an occupancy ratio corresponding to the inventory at a given time within the time window.

According to some embodiments of the computing device, the set of data samples include a time sequence of occupancy ratios.

According to some embodiments of the computing device, the processor is configured to determine the anomaly score for each data sample in the set by:

generating a reconstruction of the set of data samples; and

determining the anomaly score by comparing the reconstruction with the set of data samples.

According to some embodiments of the computing device, the processor is configured, for each of the set of data samples, to:

determine a primary sample threshold; and

determine a secondary sample threshold based on a variability metric corresponding to differences between (i) the primary sample threshold for previous data samples in the time window, and (ii) anomaly scores for the previous data samples;

weight the anomaly score based on whether the anomaly score exceeds the secondary sample threshold.

## BRIEF DESCRIPTIONS OF THE DRAWINGS

Embodiments are described with reference to the following figures.

FIG. 1 is a diagram of a system for reserving and/or deploying inventory.
FIG. 2 is a diagram of certain internal components of the server of FIG. 1.
FIG. 3 is a flowchart of a method of DoI attack detection.
FIG. 4 is a diagram of an example performance of the method of FIG. 3.
FIG. 5 is a diagram of another example performance of the method of FIG. 3.
FIG. 6 is a diagram of an example architecture for a transformer-based machine learning algorithm.

## DETAILED DESCRIPTION

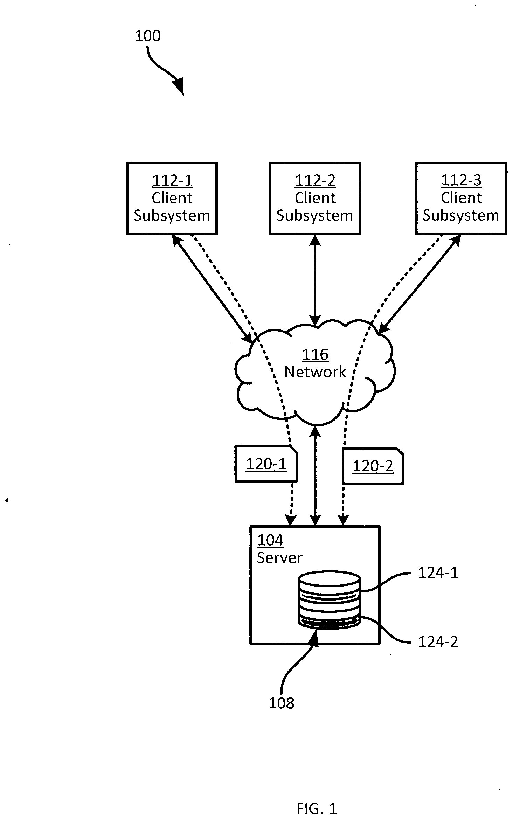

FIG. 1 illustrates a system 100 for reserving and/or deploying inventory. The inventory discussed in the examples below includes seats on flights, but it will be apparent to those skilled in the art that the systems and methods described below can be applied to any of a wide variety of other inventory, including other travel-related products and services (e.g., hotel rooms), venue access-related inventory (e.g., tickets to entertainment or sporting venues, and the like).

Deploying such inventory, e.g., providing a seat on a flight, involves the deployment of equipment (e.g., aircraft, fuel, etc.), staff, and the like in particular locations and at particular times. As will be apparent, the amount of such resources that can be deployed, particularly at a given time and place, is finite. Access to the inventory (e.g., seats on flights operated by one or more airlines) can be sold via computing systems and communication networks that are accessible by significant numbers of potential purchasers of the inventory. Indeed, the seats for a given flight can be accessible for purchase globally, and thus to a far greater number of possible buyers than there are seats for purchase. To reduce the likelihood of selling the same seat (or any other item of inventory) to more than one purchaser, inventory management systems operated by or on behalf of airlines or other suppliers may reserve, or place a hold, on inventory that is the subject of an incomplete transaction.

For example, the system 100 as illustrated includes a server 104 that maintains a repository 108 of inventory data. The repository 108 can store data defining inventory capacity (e.g., the number of seats available for each of a variety of flights), as well as data defining bookings of such inventory, such as Passenger Name Records (PNRs) or other suitable records containing passenger names, which seats are assigned to the passenger(s) on which flights, and the like. More generally, the repository 108 stores data indicating what inventory is available for purchase, and what inventory is not available for purchase. As will be apparent, the above data can be stored across multiple repositories in practice, e.g., hosted by more than one computing device. For example, each supplier (e.g., each airline) can maintain one or more distinct repositories defining inventory managed by that airline. For clarity of illustration, the discussion below revolves around a single example repository 108, with the understanding that the processes described herein can also be applied to inventory data that is stored and/or managed in more complex systems.

The server 104 can receive requests to purchase inventory from client subsystems 112-1, 112-2, and 112-3 (collectively referred to as client subsystems 112, and generically referred to as a client subsystem 112), e.g., via a network 116. The client subsystems 112 can include computing devices, or systems of computing devices, operated by individual consumers, or by intermediaries such as travel agencies in the case of travel-related inventory. The purchase of inventory by a client subsystem 112 may be a multi-step process. For example, the purchase of seats on a flight can include the transmission of search parameters such as origin and destination locations and travel dates from a client subsystem 112 to the server 104, the return of search results (e.g., a plurality of available flights matching the search parameters) from the server 104 to the client subsystem 112, and the selection of a given flight from the search results for purchase. Following such a selection by the client subsystem 112, the server 104 may initiate a purchase process that can include prompting the client subsystem 112 for traveler identification information, payment information, and the like. If such information is provided and validated by the server 104, the repository 108 is updated to associate certain inventory with the purchaser identified in the exchange above. That inventory is therefore no longer available for purchase via subsequent requests from other client subsystems 112.

The server 104 also, prior to completion of the process above, places a temporary hold on the inventory, for example in response to selection of the inventory by the client subsystem 112 for purchase. That is, before the receipt of payment information at the server 104, and in some cases before the receipt of identifying information for a passenger or the like, the server 104 can mark the selected inventory as reserved, such that that inventory is not presented as a selectable option to a different client subsystem 112 (which could introduce a risk of the same inventory being purchased twice). If the held inventory is not purchase, e.g., because the transaction is abandoned by the original client subsystem 112, payment validation fails, or the like, the temporary hold may expire after a predefined period of time (e.g., from a few minutes to a few hours, although shorter or longer hold expiry periods can also be used), releasing the previously held inventory.

Denial of Inventory (DoI) attacks manipulate the above-mentioned temporary hold behavior, e.g., by initiating but not completing purchase operations. When performed at sufficient scale and/or frequency, purchase operations that are initiated but not completed can result in temporary holds being placed on sufficient inventory to distort pricing and/or apparent inventory availability, which can lead to lost sales, inefficient deployment of resources, and the like. Detecting such attacks substantially in real time may enable the server 104 to mitigate the impact of the attacks, but detection of DoI attacks is difficult to automate. For example, FIG. 1 illustrates a first request 120-1 from the client subsystem 112-1 for a portion 124-1 of the inventory defined in the repository 108, and a second request 120-2 from the client subsystem 112-3 for a portion 124-2 of the inventory defined in the repository 108. The requests 120 may both lead to temporary holds being placed on the respective portions 124, but the second request 120-2 may be malicious. The apparent availability of inventory as defined by the repository 108 may therefore be artificially reduced. Distinguishing the requests 120-1 and 120-2, however, may be technically challenging, as DoI attacks may make use of bots, including bots executing on residential proxies that mimic the behavior of individual customers. Further, legitimate client subsystem behavior may sometimes resemble a DoI attack, e.g., in the case of a seat sale, a new release of seats for one or more flights, consumer indecision (which can lead to abandoning a booking without any malicious intent) or the like.

As a result, DoI detection instead may involve subjective assessment by human administrators, e.g., seeking patterns such as similar passenger names in partially booked inventory, unusual increases in booking activity or client subsystem 112 locations, or combinations of those and various other factors. The patterns indicative of DoI attacks may be multivariate. and difficult to discern without a combination of subjective experience and statistical analysis. Detection via human-driven analysis precludes substantially real time detection of DoI attacks, and therefore may also preclude proactive mitigation actions. Further, the volume of data (e.g., hundreds or thousands of transactions per second) may be such that human-driven analysis is time-consuming and error-prone.

The server 104 implements processes, described in detail below, to autonomously detect DoI attacks substantially in real time, e.g., close enough in time to the occurrence of the attacks (e.g., minutes to hours after an attack begins) to permit certain mitigation actions to be performed. The functionality of the server 104 is thus improved by the processes described herein, as such processes allow the server 104 to implement DoI attack detection that previously relied on subjective human judgement and was therefore not amenable to automation.

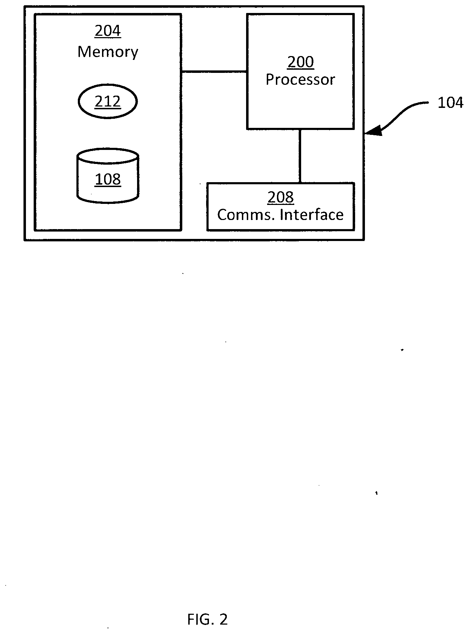

Turning to FIG. 2, before discussing the functionality of the server 104 in greater detail, certain components of the server 104 will be discussed in greater detail. As shown in FIG. 2, the server 104 includes at least one processor 200, such as a central processing unit (CPU) or the like. The processor 200 is interconnected with a memory 204, implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communication interface 208, which enables the server 104 to communicate with the other computing devices of the system 100 (e.g., client subsystems 112) via the network 116. The communication interface 208 therefore includes any necessary components (e.g., network interface controllers (NICs), radio units, and the like) to communicate via the network 116. The specific components of the communication interface 208 are selected based on the nature of the network 116. The server 104 can also include input and output devices connected to the processor 200, such as keyboards, mice, displays, and the like (not shown).

The components of the server 104 mentioned above can be deployed in a single enclosure, or in a distributed format. In some examples, therefore, the server 104 includes a plurality of processors, either sharing the memory 204 and communication interface 208, or each having distinct associated memories and communication interfaces.

The memory 204 can store the repository 108, as mentioned above. The memory 204 can also store a plurality of computer-readable programming instructions, executable by the processor 200, in the form of various applications, including a DoI attack detection application 212. As will be understood by those skilled in the art, the processor 200 executes the instructions of the application 212 (and any other suitable applications) in order to perform various actions defined by the instructions contained therein. In the description below, the processor 200, and more generally the server 104, are said to be configured to perform those actions. It will be understood that they are so configured via the execution (by the processor 200) of the instructions of the applications stored in memory 204. Execution of the application 212, as will be discussed below, configures the server 104 to monitor the inventory data in the repository and detect likely DoI attacks therefrom, as well as to initiate mitigation actions when attacks are detected.

In other embodiments, the application 212 can be implemented using pre-programmed hardware or firmware elements (e.g., application specific integrated circuits (ASICs), electrically erasable programmable read-only memories (EEPROMs), etc.), or other related components.

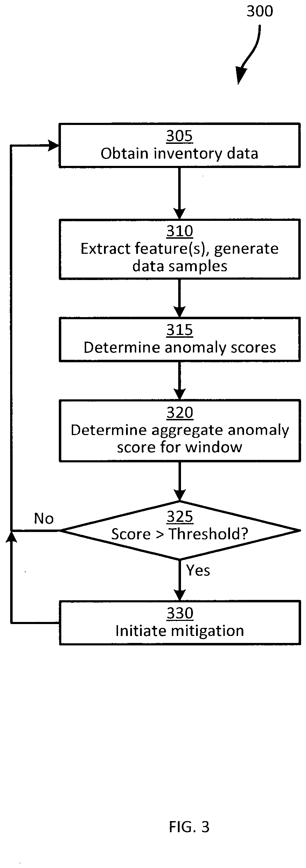

FIG. 3 illustrates a method 300 of DoI attack detection. The method 300 will be described in conjunction with its performance within the system 100. In particular, the blocks of the method 300 are performed by the server 104 via the execution of the application 212 by the processor 200.

At block 305, the server 104 is configured to obtain inventory data corresponding to a predetermined window of time. The inventory data includes any of a variety of data indicative of changes to available inventory tracked in the repository 108. For example, the inventory data can include transaction records, e.g., representing incomplete bookings (e.g., bookings for which no payment data has yet been received). A transaction record can include information such as a flight identifier (or, as will be apparent to those skilled in the art, an identifier of any other type of inventory), a number of seats reserved in connection with the booking, passenger names, origin and destination locations, travel dates, prices for the above-mentioned seats, and the like. In some examples, the inventory data can include inventory state information. For example, the repository 108 can include one or more records corresponding to each of a plurality of flights, including an occupancy ratio for the flight. The occupancy ratio can include a ratio of the number of reserved (e.g., booked or otherwise held, whether paid for or not) seats to the number of total seats (that is, the total capacity) of the flight. As will be apparent, such a ratio can also be inferred from a total capacity and the above-mentioned transaction records.

The time window mentioned above can extend from a predefined time in the past (e.g., ten minutes ago, an hour ago, a day ago, or the like), e.g., defined in configuration data maintained at the server 104, to substantially the current time (e.g., to five minutes before the present time, at which block 305 is performed). The data retrieved from the repository 108 includes transaction records created or updated within the time window, and/or inventory state information updated or created during the time window. That is, the time and date of departure for the flight(s) (or more generally, the planned time of actual deployment of the inventory) need not be considered when retrieving inventory data at block 305. The remainder of the method 300 aims to assess the inventory data retrieved at block 305 to determine whether a DoI attack is likely to have occurred during the time window. The length of the time window can therefore be selected to permit the results of the assessment to be used to initiate mitigation actions. As will be understood by those skilled in the art, the time window is preferably long enough to capture patterns that may be associated with DoI attacks, but short enough that DoI attack detection can occur in time to mitigate the distortions introduced by DoI attacks.

At block 310, the server 104 is configured to generate, from the data obtained at block 305, a set of data samples corresponding to changes to the inventory within the time window. The data samples can take a variety of forms. In some examples, e.g., in which the data obtained at block 305 includes a series of occupancy ratios for one or more flights, the data samples can include the occupancy ratios themselves. In other examples, the generation of data samples can include extracting one or more features from transaction records, state information, or both.

For example, the server 104 can be configured to extract features from transaction records including origin and/or destination locations, a number of seats reserved in the transaction record, passenger names, or the like. Other example features include a number of requests for seats (e.g., initiated transactions to purchase seats) that were not subsequently confirmed (e.g., where the transactions were not completed), and/or a ratio of confirmed requests to such unconfirmed requests. Another example feature includes a histogram of seat requests (e.g., encoded in a vector or the like), e.g., indicating a number of seat requests received in each of a plurality of time periods (e.g., a value for each day leading up to the departure date). Some features can be derived from transaction records rather than extracted as-is from transaction records. For example, the server 104 can determine, based on metadata associated with a transaction record, a period of time elapsed between search results being provided to a client subsystem 112 and a selection of a search result for booking being received from the client subsystem 112 (e.g., short time periods may be indicative of a DoI attack).

Still other features can be derived for a given transaction record with reference to other transaction records. For example, a feature corresponding to a given transaction record can include a count of other transaction records in the time window that contain the same passenger name (or a passenger name with a sufficient level of similarity, for example). Such a count need not be stored explicitly in the transaction record, but can be generated by the server 104 based on the contents of the transaction record and, for example, a search of other transaction records in the time window.

Thus, the outcome of block 310 is a set of data samples, each representing a change to the inventory represented by the repository 108. The change represented by each data sample is, in this example, the placement of a hold on a portion of the inventory, e.g., reserving one or more seats on a flight and thus rendering those seats temporarily unavailable for selection and booking to the client subsystems 112.

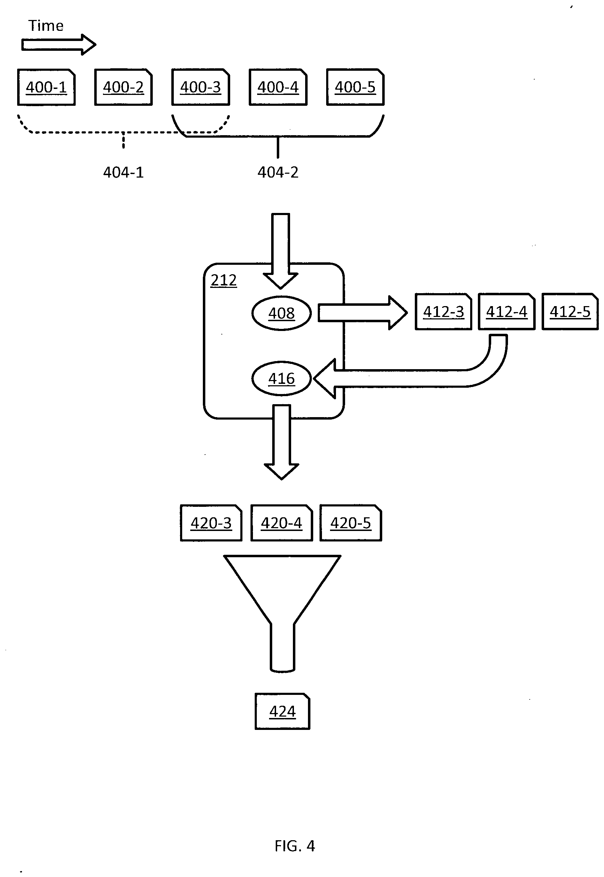

Turning to FIG. 4, an example set of data records (e.g., transaction records as noted earlier, occupancy ratios, or the like) 400-1, 400-2, 400-3, 400-4, 400-5 is illustrated, as obtained from the repository 108. For example, the records 400-3, 400-4, and 400-5 are retrieved in a current performance of block 305, corresponding to a time window 404-2. The samples 400-1, 400-2, and 400-3 may have been retrieved and processed in a previous performance of the method 300, e.g., corresponding to a preceding time window 404-1. As will be apparent from FIG. 4, the time windows 404 can overlap with one another, such that the inventory data in the repository 108 is processed in sliding windows via successive performances of the method 300. The amount of overlap between windows 404, if any, can vary, e.g., from a separation of a partial window length between windows 404 (e.g., no overlap, and a certain number of records 400 skipped between windows 404 to an overlap of 75% of the length of a window 404. In some examples, greater degrees of overlap than 75% are also possible.

Retrieval of the records 400 from the repository 108 can be performed, for example, by a preprocessor component 408 of the application 212 (which can also be implemented as a distinct application in other examples). The preprocessor 408 can also, at block 310, generate a data sample 412-3, 412-4, 412-5 corresponding to each record 400 in the window 404-2. Generation of the data samples 412 can include extracting and/or generating features as set out above. The data samples 412 can then be provided to a machine learning module 416 of the application 212 (which may also be implemented as a distinct application in some examples), for determination of anomaly scores at block 315.

Returning to FIG. 3, at block 315, the server 104 is configured to determine an anomaly score for each data sample. The server 104 executes one or more machine learning modules, such as the module 416 shown in FIG. 4, to determine the anomaly score. Various suitable machine learning algorithms will occur to those skilled in the art. In some examples, the module 416 implements an isolation forest algorithm. As will be understood by those skilled in the art, an isolation forest includes a plurality of isolation trees, each containing a set of nodes. Each node defines an attribute, and a splitting value. The node splits input data (e.g., dividing the samples 412 into two portions) based on the attribute, with any samples 412 having a value for that attribute that is above the splitting value being divided into one portion, and the other samples 412 being divided into the other portion. Each portion is then divided again via respective nodes, which apply different splitting values of different attributes. The attributes and splitting values can be selected at random during training of the isolation forest module, for example based on a set of training data.

A given isolation tree divides the samples 412 until each sample 412 is isolated from the others, or grouped only with other identical samples 412. The server 104 can determine a sample anomaly score for a given sample 412 based on the number of branches between the root node of the tree and the node that isolated the sample 412. A shorter path length to isolation indicates that the sample 412 is more likely to be an anomaly. Various mechanisms for determining anomaly scores will occur to those skilled in the art. In general, anomaly scores are inversely proportional to path length.

An isolation forest is a set of isolation trees (e.g., potentially many thousands of such trees), each generated using a different portion of the training data, and each having randomly selected splitting attributes and values. The server 104 can, in this example, determine an anomaly score for each sample 412, for each tree, and combine the anomaly scores from all the trees (for that sample 412) to generate an anomaly score for that sample 412. Referring briefly to FIG. 4, sample anomaly scores 420-3, 420-4, and 420-5 are shown as output from the module 416, corresponding to the samples 412-3, 412-4, and 412-5 respectively.

At block 320, the server 104 (e.g., the module 416, or a further downstream component of the application 212) is configured to determine an aggregate anomaly score for the window 404-2. The aggregate anomaly score can be, for example, a sum of the sample scores, an average of the sample scores, or the like. FIG. 4 illustrates the generation of an aggregate score 424 corresponding to the window 404-2. In some examples, the aggregate score can be a count of samples 412 that exceed a sample score threshold.

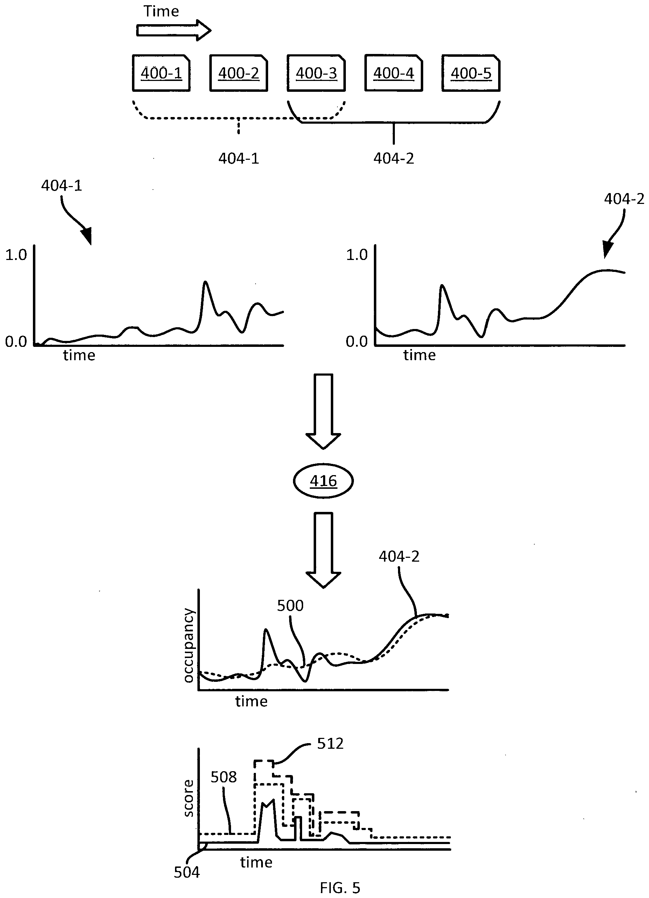

At block 325, the server 104 is configured to determine whether the aggregate anomaly score 424 for the window 404-2 exceeds a threshold. The threshold can be a static threshold, e.g., selected prior to deployment of the application 212 based on processing of previous DoI attacks via the method 300 to obtain reference anomaly scores. In some examples, the threshold can be dynamically determined, as discussed further below in connection with FIG. 5.

When the determination at block 325 is negative, indicating that the window 404-2 is unlikely to encompass a DoI attack, the server 104 can return to block 305, e.g., to obtain the next window of records 400. When the determination at block 325 is affirmative, the server 104 can initiate a mitigation action at block 330. A wide variety of mitigation actions are contemplated. In some examples, the server 104 can generate and transmit a notification, e.g., an alert message, an alert on a dashboard presented to an administrator of the server 104, or the like. The notification can include an indication of the window 404-2 (e.g., the start and end times of the window). The notification can also identify a portion of the window 404-2, e.g., containing the samples 412 that contributed to the determination at block 325. For example, when the aggregate score is a count of samples 412 exceeding a sample-level threshold, the notification can include a sub-window defining the shortest period of time that encompasses each of the samples 412 in the above-mentioned count.

Other mitigation actions initiated by the server 104 can include discarding records 400 from the repository 108 that correspond to samples 412 that exceeded a sample-level anomaly score threshold, and releasing the inventory reserved by those records 400. Further mitigation actions can include blocking the client subsystem(s) 112 that originated the transaction records 400 corresponding to anomalous samples 412, redirecting those client subsystems 112 to a honeypot website, or the like. After initiating one or more mitigation actions at block 330, the server 104 can return to block 305, e.g., to process the next window 404 of inventory data.

In some examples, referring to FIG. 5, the module 416 can implement a transformer-based machine learning algorithm, such as TranAD (Tuli et al., "TranAD: Deep Transformer Networks for Anomaly Detection in Multivariate Time Series Data", arXiv:2201.07284). For example, the server 104 can retrieve a window 404-2 of records 400 to be assessed, which may represent occupancy ratios at different times for a given flight, from the repository 108. The server 104 can also retrieve the records 400 of the window 404-1. As shown in FIG. 5, each window includes a plurality of samples (e.g., hundreds or thousands of samples, e.g., representing the current occupancy ratio for the flight or any other portion of the inventory tracked in the repository 108, sampled every second or at other suitable frequencies) defining the change in occupancy ration over time.

The module 416 can receive the windows 404-1 and 404-2 as input, e.g., to respective encoder neural networks. The windows 404 can be encoded into an encoded dataset, which is then provided to two decoder neural networks (e.g., adversarially trained). The output of the decoder networks is a reconstruction 500 of the window 404-2, obtained from the encoded data mentioned above. Greater deviations between the reconstruction and the original signal represented by the records 400 in the window 404-2 indicate a greater likelihood of a DoI attack (that is, those deviations are indicative of anomalous input data in the window 404-2). The server 104 is configured to determine anomaly scores for each sample in the window 404-2, based on the difference between the real sample and the corresponding sample of the reconstruction 500.

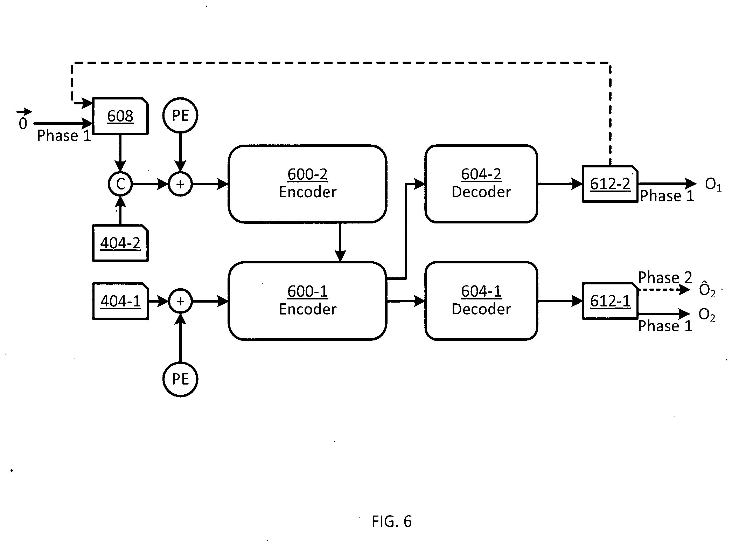

FIG. 6 illustrates an example architecture for the transformer-based machine learning algorithm mentioned above, e.g., based on the TranAD architecture. As noted above, the architecture can include a first encoder 600-1, and a second encoder 600-2, as well as a first decoder 604-1 and a second decoder 604-2. The encoder 600-2 receives more recent input data, e.g., the window 404-2, concatenated ("C") with a focus score 608 and with positional encoding ("PE") added. The encoder 600-1 receives older input data, e.g., the window 404-1 with positional encoding. The decoders 604 generate reconstructed output 612-1 ("$O_1$") and 612-2 ("$O_1$"), and the reconstructed output 612-2 is used (along with the input window 404-1) to generate the focus score 608.

The server 104 can, for example, determine anomaly scores 504 corresponding to the records 400. The server 104 can further, at block 320, determine a plurality of thresholds to generate the aggregate score for the window 404. The server 104 can determine a dynamic primary sample-level threshold 508, which can vary over the window 404. The server 104 can also determine a secondary threshold 512 based on the variability metric corresponding to differences between the primary sample threshold for previous data samples in the time window, and the anomaly scores 504 for those previous data samples. For example, the secondary threshold can be the standard deviation between the primary anomaly scores 504 and the primary threshold 508 over the preceding portion of the window 404.

For example, the secondary threshold can be calculated according to the Equations 1 and 2 below:

$$\mathbf{e_p} = \{e \,\epsilon\, \mathbf{e} | e > \varepsilon_1 \qquad\qquad \text{Equation 1}$$

$$\varepsilon_2 = \varepsilon_1 + \frac{1}{|\mathbf{e_p}|-1} \sum\nolimits_{e_p \epsilon \mathbf{e_p}} (e_p - \varepsilon_1)^2 \qquad\qquad \text{Equation 2}$$

The secondary threshold $\varepsilon_2$ is the sum of the first threshold ($\varepsilon_1$) with the standard deviation of the distance between the exceeding points (in the set $e_p$) and the value of the first threshold. The set $e_p$ is the set of reconstruction errors (e) that are detected as potentially anomalous (e.g., above the first threshold $\varepsilon_1$).

The server 104 can be configured to weight the anomaly scores 504 based on whether each score exceeds the secondary sample threshold. For example, anomaly scores 504 above the secondary and the primary threshold can be accorded a full weight (e.g., 1.0). Anomaly scores 504 above the primary threshold, but below the secondary threshold, can be accorded a reduced weight, e.g., proportional to the position of a score 504 between the thresholds 508 and 512. That is, a score closer to the threshold 508 than the threshold 512 may receive a lower weight than a score closer to the threshold 512 than to the threshold 508. The server 104 can generate an aggregate score at block 320 by multiplying each score by the corresponding weight, and summing the weighted scores, for example. The aggregate score can then be compared to a static, predetermined threshold, as described earlier.

Those skilled in the art will appreciate that in some embodiments, the functionality of the application 212 may be implemented using pre-programmed hardware or firmware elements (e.g., application specific integrated circuits (ASICs), electrically erasable programmable read-only memories (EEPROMs), etc.), or other related components.

The scope of the claims should not be limited by the embodiments set forth in the above examples, but should be given the broadest interpretation consistent with the description as a whole.

## Claims

1.   A method, comprising:

generating, from a repository of inventory data corresponding to a reservable inventory, a set of data samples corresponding to changes to the inventory data within a time window;
determining, via execution of a machine learning module, an anomaly score for each data sample in the set;
determining an aggregate anomaly score for the window;
comparing the aggregate anomaly score to a threshold; and

initiating a mitigation action when the aggregate anomaly score exceeds the threshold.

2. The method of claim 1, wherein generating each data sample in the set includes:

obtaining a transaction record defining a reserved portion of the inventory; and
extracting a feature from the transaction record.

3. The method of claim 2, wherein the reservable inventory includes a flight, and wherein the feature includes at least one of:

an origin location of the flight;
a destination location of the flight;
a passenger name; or
a number of seats in the reserved portion.

4. The method of claim 1, wherein the machine learning module includes an isolation forest.

5. The method of claim 1, wherein determining the aggregate anomaly score includes:
determining a count of a subset of the data samples having anomaly scores that exceed a sample threshold.

6. The method of claim 1, wherein the mitigation action includes transmitting a notification including an indicator of the time window.

7. The method of claim 1, wherein the mitigation action includes:

discarding reservation records in the repository that correspond to data samples having anomaly scores exceeding a sample threshold; and
releasing reserved inventory corresponding to the discarded reservation records.

8. The method of claim 1, wherein generating each data sample in the set includes:
obtaining, from the repository, an occupancy ratio corresponding to the inventory at a given time within the time window.

9. The method of claim 8, wherein the set of data samples include a time sequence of occupancy ratios.

10. The method of claim 1, wherein determining the anomaly score for each data sample in the set includes:

generating a reconstruction of the set of data samples; and
determining the anomaly score by comparing the reconstruction with the set of data samples.

11. The method of claim 10, further comprising, for each of the set of data samples:

determining a primary sample threshold; and
determining a secondary sample threshold based on a variability metric corresponding to differences between (i) the primary sample threshold for previous data samples in the time window, and (ii) anomaly scores for the previous data samples;
weighting the anomaly score based on whether the anomaly score exceeds the secondary sample threshold.

12. A computing device, comprising:

a memory storing a repository of inventory data corresponding to a reservable inventory; and
a processor configured to:

generate, from the repository, a set of data samples corresponding to changes to the inventory data within a time window;
determine, via execution of a machine learning module, an anomaly score for each data sample in the set;
determine an aggregate anomaly score for the window;
compare the aggregate anomaly score to a threshold; and

initiate a mitigation action when the aggregate anomaly score exceeds the threshold.

FIG. 1

FIG. 2

300

```
┌──────────────────────────┐
│           305            │
│   Obtain inventory data  │
└──────────────────────────┘
             │
             ▼
┌──────────────────────────┐
│           310            │
│  Extract feature(s),     │
│  generate data samples   │
└──────────────────────────┘
             │
             ▼
┌──────────────────────────┐
│           315            │
│ Determine anomaly scores │
└──────────────────────────┘
             │
             ▼
┌──────────────────────────┐
│           320            │
│ Determine aggregate      │
│ anomaly score for window │
└──────────────────────────┘
             │
             ▼
       ╱───────────╲
  No  ╱     325      ╲
◄─── ╱ Score > Threshold? ╲
      ╲               ╱
       ╲─────────────╱
             │ Yes
             ▼
┌──────────────────────────┐
│           330            │
│    Initiate mitigation   │
└──────────────────────────┘
```

FIG. 3

Time

| 400-1 | 400-2 | 400-3 | 400-4 | 400-5 |

404-1          404-2

212

408 →

416 ←

412-3  412-4  412-5

420-3  420-4  420-5

424

FIG. 4

FIG. 5

FIG. 6

**EUROPEAN SEARCH REPORT**

Application Number

EP 24 31 5520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/120318 A1 (MARINKOVICH SAVA [US] ET AL) 20 April 2023 (2023-04-20) <br> * paragraphs [0775], [0966], [0982] - paragraph [2647]; claim 1; figures 1-158 * <br> ----- | 1-12 | INV. <br> G06Q10/0631 |
| Y | US 2021/286874 A1 (SPLUNK INC [US]) 16 September 2021 (2021-09-16) <br> * paragraph [0207] - paragraph [0303]; claim 1; figures 1-19 * <br> ----- | 1-12 | |

TECHNICAL FIELDS
SEARCHED     (IPC)

G06Q
G06F

The present search report has been drawn up for all claims

| Place of search | Date of completion of the search | Examiner |
|---|---|---|
| Munich | 25 April 2025 | Viets, Ana |

## ANNEX TO THE EUROPEAN SEARCH REPORT
## ON EUROPEAN PATENT APPLICATION NO.

EP 24 31 5520

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | | Publication date | Patent family member(s) | | Publication date |
|---|---|---|---|---|---|
| US 2023120318 A1 | | 20-04-2023 | AU | 2022274234 A1 | 07-12-2023 |
| | | | CA | 3177645 A1 | 11-11-2022 |
| | | | EP | 4337467 A1 | 20-03-2024 |
| | | | JP | 2024518578 A | 01-05-2024 |
| | | | KR | 20240019771 A | 14-02-2024 |
| | | | US | 2023079074 A1 | 16-03-2023 |
| | | | US | 2023080545 A1 | 16-03-2023 |
| | | | US | 2023083724 A1 | 16-03-2023 |
| | | | US | 2023102209 A1 | 30-03-2023 |
| | | | US | 2023105028 A1 | 06-04-2023 |
| | | | US | 2023110037 A1 | 13-04-2023 |
| | | | US | 2023120318 A1 | 20-04-2023 |
| | | | US | 2023137578 A1 | 04-05-2023 |
| | | | US | 2023222132 A1 | 13-07-2023 |
| | | | US | 2023222413 A1 | 13-07-2023 |
| | | | US | 2023252047 A1 | 10-08-2023 |
| | | | US | 2023289340 A1 | 14-09-2023 |
| US 2021286874 A1 | | 16-09-2021 | US | 11055405 B1 | 06-07-2021 |
| | | | US | 2021286874 A1 | 16-09-2021 |
| | | | US | 2023153430 A1 | 18-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TULI et al.** TranAD: Deep Transformer Networks for Anomaly Detection in Multivariate Time Series Data. *arXiv:2201.07284*